# EUROPÄISCHE PATENTANMELDUNG

(11) **EP 1 780 503 A2**
(43) Veröffentlichungstag der Anmeldung: **02.05.2007**
(21) Anmeldenummer: 07000724.0
(22) Anmeldetag: 07.09.1999
(51) Int. Cl.: G01B 11/30, G01B 11/24

(54) **Vorrichtung zum Messen der Geometrie und Planheit von Metallband**

(30) Priorität: 14.09.1998 DE 19842138
(62) Teilanmeldung aus: 99947285.5
(71) Anmelder: Betriebsforschungsinstitut VDEh Institut für angewandte Forschung GmbH, 40237 Düsseldorf (DE)
(72) Erfinder: Müller, Ulrich, 40789 Monheim (DE); Sonnenschein, Detlef, 40822 Mettmann (DE); Winter, Detlef, 38533 Vordorf (DE); Pauker, Gustav, 41066 Mönchengladbach (DE); Stockmeyer, Rudolf, 40764 Langenfeld (DE)
(74) Vertreter: Tilmann, Max Wilhelm

(57) **Zusammenfassung**

Vorrichtung zum Erzeugen eines Musters auf einer Meßoberfläche (4) mit Hilfe eines Projektors (23) und eines Dias und verschiedenen vorteilhaften Ausgestaltungen des Meßsystems.

## Beschreibung

Die Erfindung betrifft ein Meßsystem für die Oberflächengeometrie von Flachprodukten, insbesondere von Metallband oder Schüttgut sowie der aus der Geometrie abgeleiteten Planheit.

Für das Messen der Obenflächengeometrie von Flachprodukten sind verschiedene Verfahren bekannt. Neben dem verbreiteten Kontaktmessen, bei dem mehrere Kontaktmeßelemente die zu vermessende Oberfläche abfahren ist Insbesondere im Metallbandbereich das berührungslose Messen vorteilhaft.

Hierzu ist es bekannt, optische Meßpunkte auf der Bandoberfläche zu erzeugen, deren Ortsveränderung über geeignete Sensoren zu erfassen und mit Hilfe eines Triangulationsverfahrens in Ortsveranderungen auf der Bandoberfläche umzurechnen. Die Veränderung der Ortskoordinaten des Oberflächenpunktes ergibt sich dabei aus dem Einfallswinkel des Lichtstrahls und der Position des Sensors in Verbindung mit der Ortsveränderung des Abbildungspunktes.

Über eine Mehrzahl von Lichtpunkten lassen sich Aussagen über einen größeren Bereich des Flachproduktes treffen. Zum Messen von Flächen sind jedoch Verfahren, die mit Meßlinien arbeiten, besser geeignet So wird beispliesweise der Moiré-Effekt ausgenutzt, um ein Inteferrenzmuster auf der Oberfläche des Flachproduktes abzubilden und aus diesem die Oberflächengeometrie quantitativ zu ermitteln.

Aus der deutschen Offenlegungsschrift 197 09 992 ist ein Verfahren zum Messen der Oberflächengeometrie eines Metallbandes bekannt, bei dem Mittels einer Lichtquelle eine Vielzahl von Linien durch Projektion beispielsweise mit Hilfe eines Liniendias auf der Bandoberfläche erzeugt wird.

Hierzu ist oberhalb des Bandes ein Projektor angeordnet, der auf die zu messende Bandoberfläche ausgerichtet ist. Zwischen dem Projektor und der zu messenden Bandoberfläche ist ein Dia vorgesehen, durch welches ein Streifenmuster auf der Bandoberfläche abgebildet wird. Bandunebenheiten bewirken eine Veränderung der auf die Bandoberfläche projizierten Linien. Mit einer in Bandlaufrichtung hinter dem Projektor angeordneten Meßvorrichtung, beispielsweise einer CCD-Kamera lassen sich die Änderungen der Meßlinien auf der Bandoberfläche erfassen.

Zur Kalibrierung des Systems wird das Linienmuster auf eine Referenzebene projiziert. Hierzu wird ein sogenannter Einmeßtisch verwendet. Die von der Kamera erfaßten Bilder der Referenzebene und des zu messenden Bandes werden nach dem sogenannten Phasenschiebeverfahren ausgewertet und verglichen. Mit diesem Verfahren wird aus dem Kamerabild ein Phasenbild erzeugt Jeder Bildpunkt der Kamera liefert einen bestimmten Helligkeitswert. In Querrichtung zum Linienmuster liegt ein periodischer Hel-Ilgkeitsverlauf vor. Mit Hilfe des Phasenschiebeverfahrens wird jedem Bildpunkt ein Phasenwinkel zugeordnet. Die Phasen, die man mit Hilfe des Einmeßtisches erhält, dienen als Referenzphasenbild. Mit Hilfe des am Meßobjekt gewonnenen Phasenbildes und des Referenzphasenbildes lassen sich die tatsächlichen Höhendifferenzen am Meßobjekt ermitteln.

Mit diesem Meßsystem lassen sich bereits hochwertige Meßergebnisse erzielen, doch ist das System insbesondere In seiner Variabilität begrenzt und bezüglich der Meßempfindlichkeit verbesserungsfähig.

Der Erfindung liegt die Aufgabe zugrunde, ein Oberflächenmeßsystem zu schaffen, das für verschiedenartige Flachprodukte geeignet ist und hochwertige Meßergebnisse liefert. Ferner liegt der Erfindung die Aufgabe zugrunde, das in der deutschen Offenlegungsschrift 197 09 992 beschriebene Meßverfahren bezüglich seiner möglichen Einsatzbereiche und seiner Auflösung weiterzubilden.

Das Problem der Erfindung wird durch die unabhängigen Ansprüche gelöst. Vorteilhafte Ausgestaltungen sind in den Unteransprüchen wiedergegeben.

Bei dem bevorzugten Gesamtsystem kommen sämtliche unabhängigen Aspekte der Erfindung zum tragen. Nach einem Aspekt des Gesamtsystems können Kamera und Projektor mit den Meßpunkten einen Winkel aufspannen, der kleiner als 90° ist und/oder auf einer Seite des Flachkörpers in unterschiedlicher Höhe angeordnet sind. Dadurch ist eine platzsparende Ausführung gegeben, die den örtlichen Einsatzbereich des Meßsystems erheblich erweitert, da in vielen Anwendungsfällen nicht ausreichend Platz oberhalb des Flachkörpers zur Verfügung steht.

Zwischen Projektor und Flachkörper ist nach einem weiteren Aspekt der Erfindung ein Dia angeordnet, welches die elektronische Erzeugung eines Linienmusters, beispielsweise über ein transparentes Flüssigkristallelement, zuläßt. Ober eine entsprechende Steuerung oder die Computeranlage des Meßsystems lassen sich so die für den Einzelfall optimalen Projektionsmuster einstellen. Dies erlaubt beispielsweise eine den Bedürfnissen angepaßte Kombination der Liniendichte, Heiligkeit und anderer Eigenschaften des projizierten Musters. So wird vermieden, für jeden einzelnen Meßfall ein gesondertes Dia einzusetzen und insbesondere zunächst ein Dia mit der gewünschten Zusammenstellung von Projektionseigenschaften anfertigen lassen zu müssen. Dadurch verringert sich der Kosten- und Zeitaufwand für die einzelnen Anwendungen. Das erfindungsgemäße System ist hiermit wesentlich flexibler für verschiedene Einsatzbereiche, insbesondere verschiedene Oberflächen.

Darüber hinaus weist diese bevorzugte Ausführungsform des erfindungsgemäßen Meßsystems nach einem weiteren Aspekt der Erfindung eine geregelte Aussteuerung der Kamera und der Beleuchtungsparameter auf. Blende, Belichtungszeit und Helligkeit des Projektors werden automatisch so geregelt, daß sämtliche Bildpunkte des Meßbereiches die gewünschte Aussteuerung aufweisen. Dies ist besonders vorteilhaft bei der Verwendung des erfindungsgemäßen Meßsystems mit Kaltband. Hier können sich die Eigenschaften beispielsweise durch Reflexion an der Bandoberfläche während der Messung ständig ändern und somit die Meßsignale verfälschen.

Die Leistungsfähigkeit des Meßsystems wird durch einen anderen Aspekt der Erfindung dadurch erhöht, daß die Meßkamera eine nichtlineare Empfindlichkeit aufweist. Dies ist insbesondere dann von Vorteil, wenn die sich ändernden Reflexionseigenschaften beispielsweise eines Kaltbandes über die Aussteuerung mit Zeit- und Blendenanpassung nicht mehr kompensiert werden können. Durch die nichtlineare Empfindlichkeit wird ähnlich wie beim menschlichen Auge ein erhebliches Helligkeitsspektrum abgedeckt, so daß sämtliche Meßsituationen akkurat erfaßt werden können.

Zur weiteren Verbesserung der Qualität der Meßergebnisse lassen sich die Signale filtern. Insbesondere bei der Messung von Metallband in der Walzstraße können sich die Meßwerte durch eineVerschiebung des Bandes In Richtung des Normalvektors der Referenzebene oder in anderen Richtungen sowie durch Biegung des Bandes unerwünscht ändern. Die Verschiebung des Bandes in Richtung des Normalvektors wird bereits durch die Verwendung eines aufprojizierten Linienmusters weitgehend kompensiert. Die Verschiebung in anderen Richtungen oder Biegung des Bandes läßt sich durch Filterung von den Oberflächenänderungen durch Bandunebenheit differenzieren, da sich die Wellenlängen der jeweiligen Bewegungsanteile unterscheiden. Darüber hinaus ergibt diese Bandbewegung sogenannte abwickelbare Flächen, während die Planheit auf dem nicht abwickelbaren Anteil beruht. Auf dieser Grundlage läßt sich mit der beschriebenen Filterung ein Meßsignal darstellen, welches ausschließlich eine Aussage Ober die Bandunebenheit enthält. Mit den ermittelten Werten wird vorzugsweise eine geeignete virtuelle Ausgleichsfläche erzeugt, mit der unerwünschte Verschiebungen und Biegungen rechnerisch ausgeglichen werden können.

Das Einmessen bzw. Kalibrieren des Meßsystems erfolgt bei dem bevorzugten System ohne die übliche körperliche Referenzebene an der Meßstelle, indem beliebige Fixpunkte der Anlage verwendet werden, um eine rechnerische Referenzebene zu erzeugen. Mit dieser Referenzebene läßt sich das System sowohl bezüglich der Höhendifferenzen als auch bezüglich der Längskallbrierung einstellen. Dies vermeidet die Verwendung der unhandlichen und schweren körperlichen Referenzebene, verringert den erforderlichen Meßraum und vermeidet Schwierigkeiten, die Referenzebene in die für das Einmessen erforderliche Position zu bringen. Darüber hinaus wird eine Verfälschung des Meßsignals durch Unebenheiten der Referenzebene, die in der Regel zwischen +0,5 und -0.5 mm liegen, vermieden.

Aus dem Kamerabild können nicht nur die Höhen der Bandoberfläche des laufenden Bandes ermittelt werden, sondern bei nicht endlosen Bändern, wie z.B. Warmband oder Grobblech, auch die Höhen am Bandanfang und - ende, insbesondere der sogenannte Ski, d. h. eine Aufwärts- oder Abwärts-Biegung.

Außer den Höhen kann aus den Bilddaten die Umrandung ermittelt werden. Diese beinhaltet die Bandbreite, den Bandsäbel und die im allgemeinen krummlinigen Begrenzungen des Bandanfangs und Bandendes. Mit dem beschriebenen Verfahren werden so z. B. auch krummlinig begrenzte Enden erfaßt, so daß auch mit Hilfe dieses Meßverfahrens die Walzanlage für das folgende Band korrigiert werden kann.

Das Meßverfahren kann ferner zur Ermittlung der optimalen Schnittlänge benutzt werden.

Die Erfindung wird im folgenden anhand eines in der Zeichnung dargestellten Ausführungsbeispiels des näheren erläutert.

In der Zeichnung zeigen:
- Fig. 1: ein Schaubild der geregelten Aussteuerung des Meßsystems;
- Fig. 2: eine Darstellung einer Anordnung von Projektor und Kamera;
- Fig. 3: Bandformfehler, wie Säbel, Ski, krumme Bandenden und die Bandkanten zur Bestimmung der Bandbreite;
- Fig. 4: Fließdiagramm zum Ablauf eines Meßvorgangs;
- Fig. 5: ein Flüssigkristallelement.

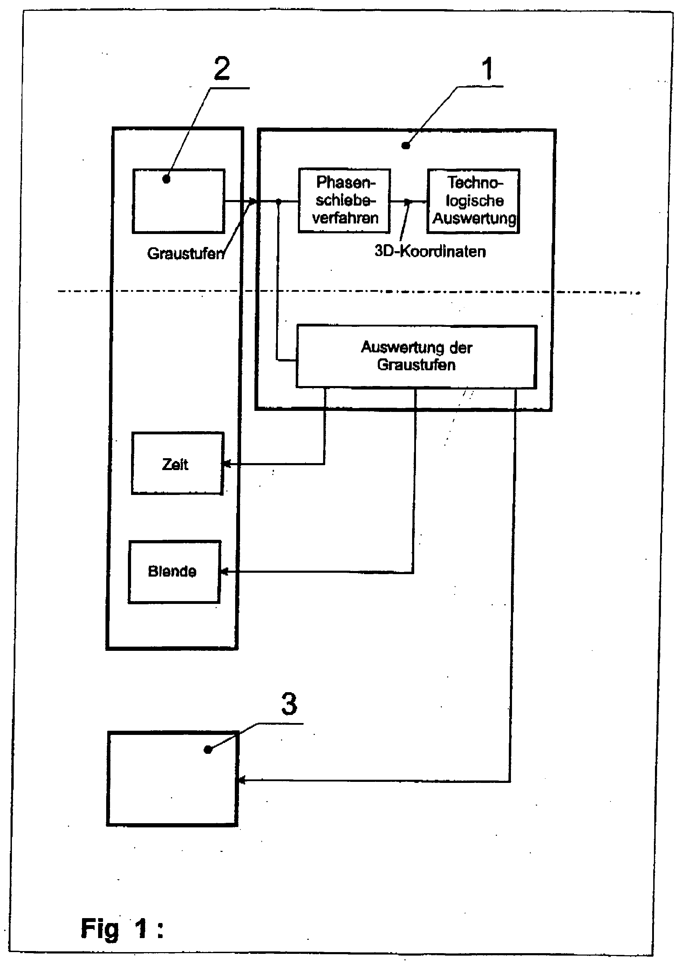

Die in Fig. 1 gezeigte geregelte Aussteuerung des Gesamtsystems gibt den herkömmlichen Aufbau eines Meßsystems oberhalb der gestrichelten Linie wieder, während die erfindungsgemäße Regelung des Meßsystems unterhalb der gestrichelten Linie erkennbar ist im Prozeßrechner 1 werden dabei die von der CCD-Kamera 2 erzeugten Graustufenwerte quantitativ ausgewertet und in Relation zu dem von der CCD-Kamera 2 vorgegebenen Empfindlichkeitsbereich gesetzt. Um im optimalen Empfindlichkeitsbereich zu messen, werden dann die Parameter Zeit, Blende und Beleuchtungsstärke des Projektors 3 geregelt.

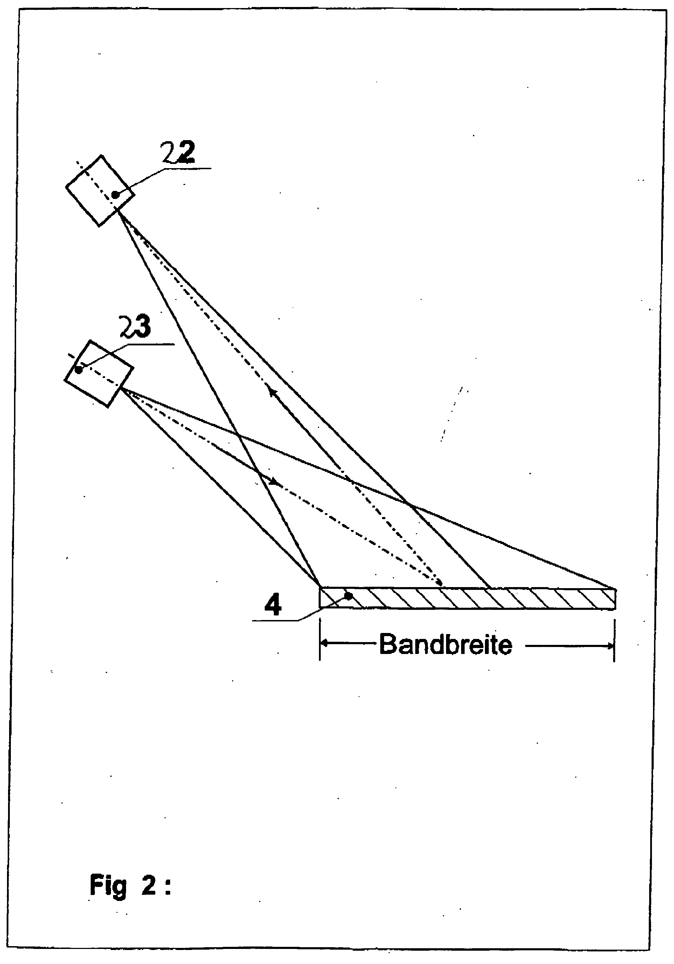

In Fig. 2 ist die Anordnung von Projektor 23 und Kamera 22 erkennbar, die gegenüber herkömmlichen Systemen einen wesentlich geringeren Raum oberhalb des Bandes 4 einnimmt. Dabei können Kamera 22 und Projektor 23 übereinander oberhalb des Bandes oder übereinander neben dem Band angeordnet sein. Ebenso können Kamera 22 und Projektor 23 nebeneinander an einer Bandseite oder oberhalb des Bandes 4 angeordnet sein.

Die Auswertung der Graustufen in bezug auf die Bandgeometrie erfolgt nach dem üblichen Phasenschiebeverfahran mit zusätzlicher Filterung der unerwünschten Meßwertanteile.

Diese können durch Bandbewegungen in Richtung Banddicke entstehen. Diese Richtung ist die Richtung des Normalvektors auf die Referenzebene. Aufgrund von Schwingung und Biegung können nun diese Bandbewegungen an den einzelnen Bandsteilen unterschiedlich sein. Dies würde einen Fehler in der gemessenen Planheit ergeben. Diese unerwünschten Meßwertanteile werden aus den primär gemessenen herausgefiltert. Dabei wird davon ausgegangen, daß diese unerwünschten Meßwertanteile sich in Frequenz und Wellenlänge von den Meßwertanteilen, die auf die zu messende Planheit zurückzuführen sind, unterschelden.

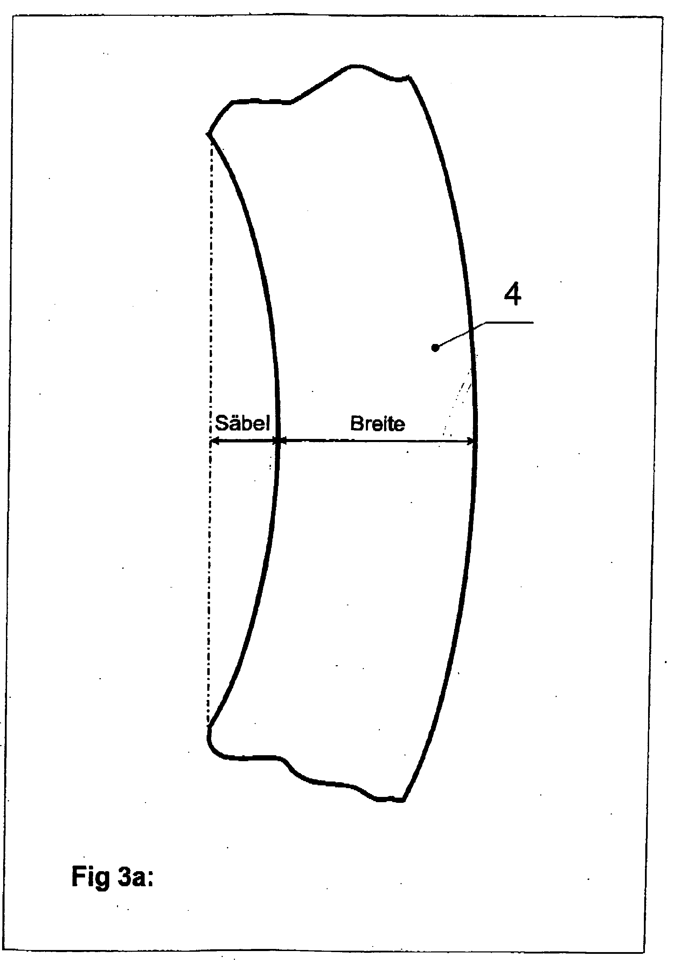

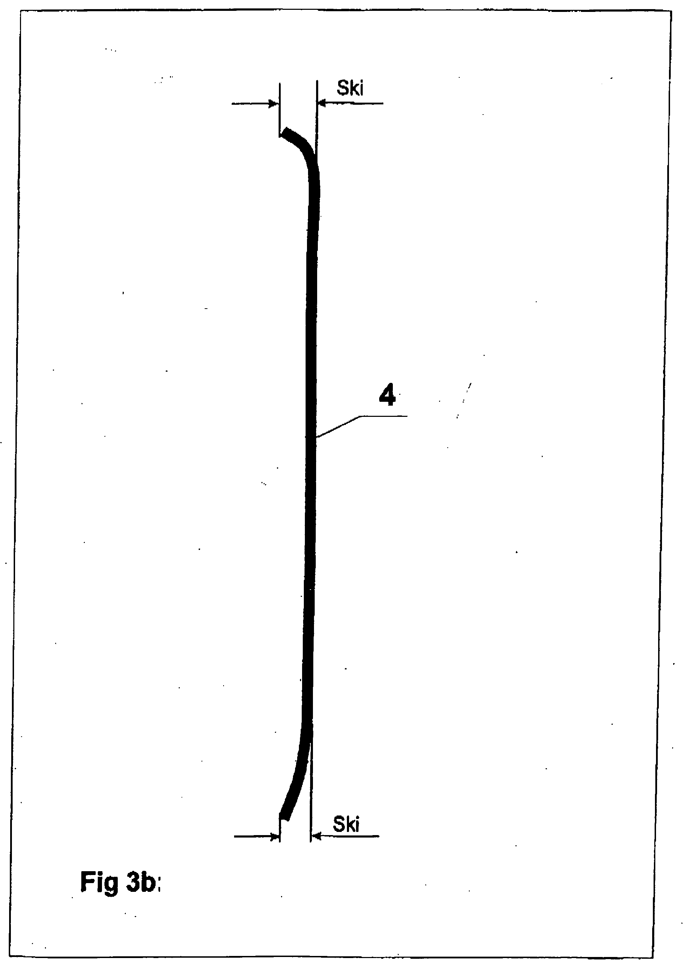

In Fig. 3 a Ist der Bandformfehler "Säbel" des Bandes 4 dargestellt.

In Fig. 3 b ist ein weiterer Bandformfehler "Ski" des Bandes 4 dargestellt. Dieser Bandformfehler wird einerseits erfaßt Andererseits wird aber dieser deformierte Bandabschnitt aus der Bandlänge, über welche die Planheit gemessen wird, ausgenommen.

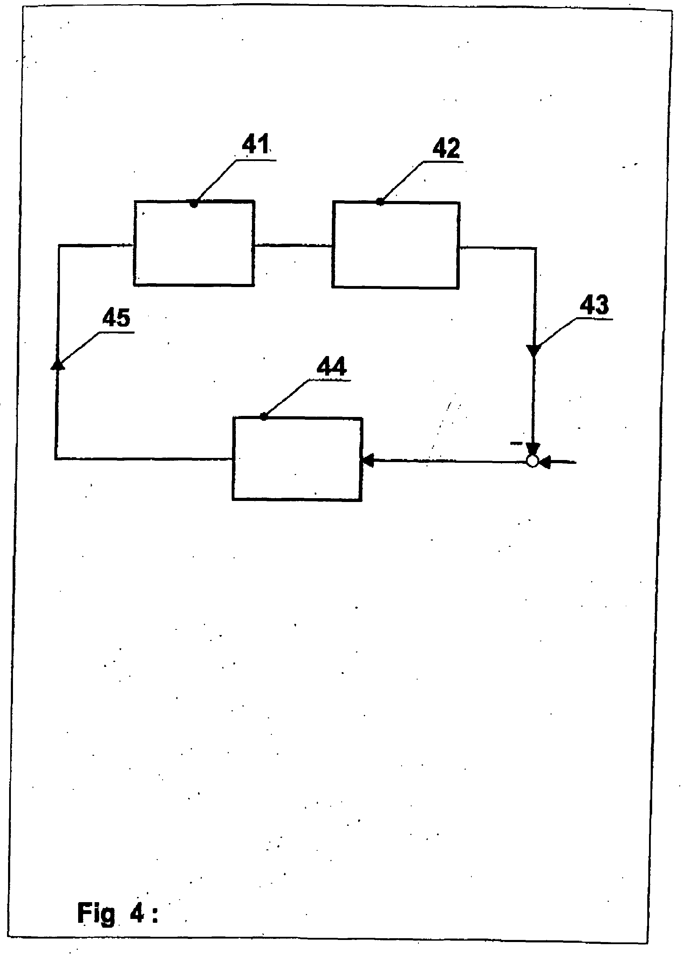

Aus dem in Fig. 4 dargestellten Fließdiagramm ergibt sich der Ablauf eines Meßvorgangs, bei dem mit Hilfe der CCD-Kamera die Bandränder ermittelt und durch den Rechner ausgewertet werden, um schließlich für die Regelung der Walzstraße eingesetzt zu werden.

Die Walzstraße 41 erzeugt eine Bandform, deren Kennwerte 43, wie Planheit, Säbel, Ski und Bandbreite, mit dem Meßsystem 42 erfaßt werden.

Diese werden einem Mehrgrößenregler 44 zugeführt, der Sollwertänderungen verschiedener Stellgrößen an der Walzstraße vorgibt.

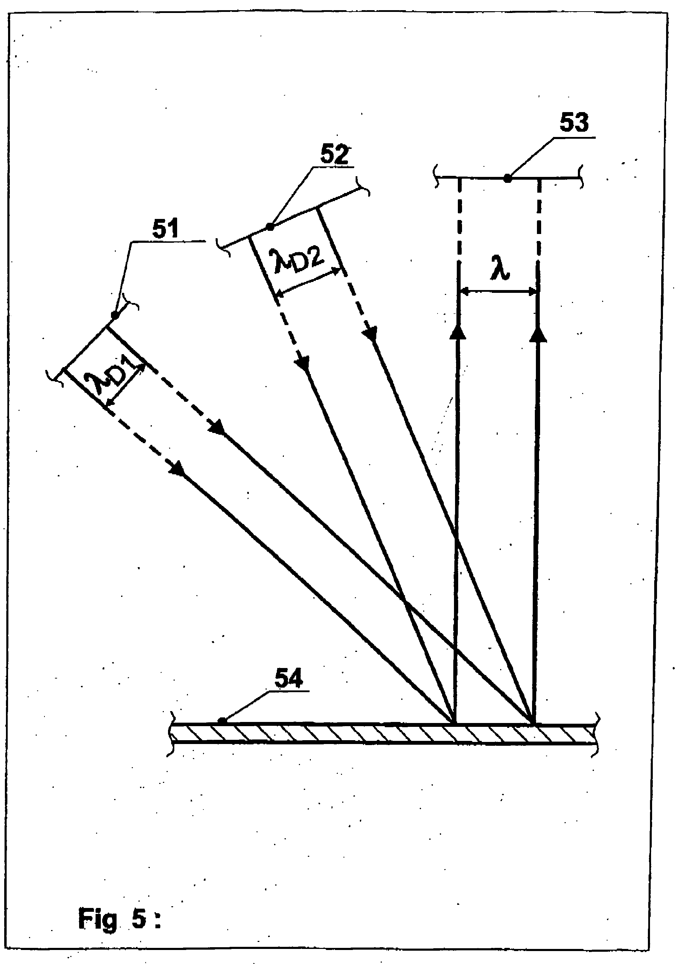

In Fig. 5 ist schematisch die Funktion eines Flüssigkristalldias 51, 52 in Verbindung mit dem Meßsystem gezeigt. Einen Ausschnitt des Dias 51, 52 über eine Wellenlänge D1, zeigt 51. Es sind zwei Einbaustellen des Projektors gezeigt die zu den Flüssigkristalldias 51, 52 korrespondieren und jeweils ein Lichtstrahl am Anfang und am Ende einer Wellenlänge dargestellt. Senkrecht zum Band 54 ist die Kamera 53 dargestellt, wobei der Kamerawinkel beliebig ist. Ziel ist es, eine konstante Wellenlänge Lambda im Bild zu erhalten, unabhängig von der Position des Projektors und der Kamera 53. Dieses Ziel wird erreicht, in dem die Wellenlänge im Dia 51, 52 per Programm geignet geändert wird. Es wird somit jeweils das optimale Dia für den vorgegebenen Projektor- und Kamerawinkel eingestellt.

## Patentansprüche

1. Vorrichtung zum Messen der Geometrie und Planheit von Metallband durch Erzeugung eines Musters auf der Meßoberfläche mit einer Lichtquelle und einer Kamera, **dadurch gekennzeichnet, daß** das Muster auf der Meßoberfläche 4 mit Hilfe eines Dias 51, 52 durch Projektion erzeugt wird.

2. Vorrichtung nach Anspruch 1, **dadurch gekennzeichnet, daß** ein änderbares Muster erzeugt wird.

3. Vorrichtung nach Anspruch 2, **dadurch gekennzeichnet, daß** das Muster mit Hilfe einer Flüssigkristalleinrichtung 51, 52 erzeugt wird.

4. Vorrichtung nach einem der vorhergehenden Ansprüche, **dadurch gekennzeichnet, daß** die Projektorbeleuchtung 23, 53 über die Auswertung der von der Kamera 22 ermittelten Graustufen geregelt wird, um eine geeignete Aussteuerung der Kamera 22 zu erreichen.

5. Vorrichtung nach einem der vorhergehenden Ansprüche, **dadurch gekennzeichnet, daß** die Belichtungszeit und/oder Blende der Kamera 22 über die Auswertung der Graustufen des von der Kamera 22 ermittelten Oberflächenbildes geregelt wird, um eine geeignete Aussteuerung der Kamera 22 zu erreichen.

6. Vorrichtung nach einem der vorhergehenden Ansprüche, **dadurch gekennzeichnet, daß** eine Kamera 22 mit nichtlinearer Empfindlichkeit verwendet wird.

7. Vorrichtung nach einem der Ansprüche 1 bis 6, **dadurch gekennzeichnet, daß** Projektor 23, 53 und Kamera 22 mit den Meßpunkten einen Winkel aufspannen, der kleiner als 90° ist und/oder auf der gleichen Seite seitlich neben dem Meßobjekt 4 angeordnet sind.

8. Vorrichtung nach einem der Ansprüche 1 bis 6, **dadurch gekennzeichnet, daß** Projektor 23, 53 und Kamera 22 nebeneinander oder übereinander über dem Meßobjekt 4 angeordnet sind.

9. Verfahren zum Messen der Bandgeometrie mit einer Vorrichtung nach einem der vorhergehenden Ansprüche, **dadurch gekennzeichnet, daß** eine Filterung von elastischen Formänderungen mittels der zunächst erfaßten Höhen durchgeführt wird und die Höhen nach unterschiedlichen Frequenzen und Wellenlängen aufgrund von Bandbewegungen getrennt werden.

10. Verfahren zum Messen der Geometrie des Bandrandes mit einer Vorrichtung nach einem der vorhergehenden Ansprüche, **gekennzeichnet durch** die Verwendung der Randbegrenzung des Bandes.

11. Verfahren nach Anspruch 11, **dadurch gekennzeichnet, daß** aus der Randbegrenzung die Bandbreiten- oder die Schnittlänge ermittelt wird.

12. Verfahren zur Messung der Bandgeometrie, **gekennzeichnet durch** rechnerisches Erzeugen einer Referenzebene und eines Referenzphasenbildes aus der Geometrie der bekannten Meßeinrichtungselemente.

13. Verwendung einer Vorrichtung zum Messen der Geometrie und Planheit von Flachprodukten durch Erzeugung eines Musters auf der Meßoberfläche mit einer Lichtquelle und einer Kamera, bei der das Muster auf der Meßoberfläche 4 mit Hilfe eines Dias 51, 52 durch Projektion erzeugt wird zur Messung der Oberfläche von Metallband.
